# EUROPÄISCHE PATENTSCHRIFT

(11) **EP 4 213 132 B1**
(45) Veröffentlichungstag und Bekanntmachung des Hinweises auf die Patenterteilung: **11.03.2026**
(21) Anmeldenummer: 22151297.3
(22) Anmeldetag: 13.01.2022
(51) Int. Cl.: G09B 9/042, B62D 5/00, B62D 6/00

(54) **KRAFTFAHRZEUG UND VERFAHREN ZUM BETRIEB EINES KRAFTFAHRZEUGS**
MOTOR VEHICLE AND METHOD FOR OPERATING A MOTOR VEHICLE
VÉHICULE AUTOMOBILE ET PROCÉDÉ DE FONCTIONNEMENT D'UN VÉHICULE AUTOMOBILE

(43) Veröffentlichungstag der Anmeldung: 19.07.2023
(73) Patentinhaber: thyssenkrupp Presta Aktiengesellschaft, 9492 Eschen (LI); thyssenkrupp AG, 45143 Essen (DE)
(72) Erfinder: Polmans, Kristof, 6464 Tarrenz (AT); Szepessy, Imre, 9493 Mauren (LI); Hirschmann, Richard, 9493 Mauren (LI)
(74) Vertreter: thyssenkrupp Intellectual Property GmbH

(56) Entgegenhaltungen:
- EP-B1- 1 495 434
- EP-B1- 1 776 687
- DE-A1- 102018 106 872
- DE-A1- 102019 122 903
- US-B2- 10 056 009
- US-B2- 7 200 536

## Beschreibung

### Stand der Technik

Die Erfindung betrifft ein Kraftfahrzeug mit einem Steer-by-Wire-Lenksystem, umfassend eine Lenkeingabevorrichtung, von der mindestens ein elektromotorischer Lenkaktuator ansteuerbar ist, wobei die Lenkeingabevorrichtung eine Sensoreinrichtung zur Erfassung manueller Eingaben umfasst und einen elektromotorischen Feedback-Aktuator aufweist, der ansteuerbar ist zur Erzeugung eines mechanischen Feedbacks. Weiterhin umfasst die Erfindung ein Verfahren zum Betrieb eines derartigen Kraftfahrzeugs.

Steer-by-wire-Lenksysteme für Kraftfahrzeuge nehmen manuelle Lenkbefehle des Fahrers wie konventionelle mechanische Lenkungen durch manuelle Betätigung einer Lenkhandhabe einer Lenkeingabevorrichtung entgegen, beispielsweise durch Drehung eines Lenkrades, welches am fahrerseitigen, in Fahrtrichtung hinteren Ende einer um die Längsachse drehbar gelagerten Lenkspindel angebracht sein kann. Die Lenkhandhabe ist jedoch nicht mechanisch durchgehend über eine Lenkwelle und ein Lenkgetriebe mit den zu lenkenden Rädern verbunden, sondern wirkt mit einer elektronischen Sensoreinrichtung zusammen. Diese umfasst Drehwinkel- bzw. Drehmomentsensoren, die den manuell eingebrachten Lenkbefehl erfassen und über eine Steuereinheit ein elektrisches Steuersignal erzeugen. Dadurch wird ein mit mindestens einem lenkbaren Rad wirkverbundener elektromotorischer Lenkaktuator oder Lenksteller zur Erzeugung eines Lenkeinschlags angesteuert.

Zur Erzeugung eines realistischen Fahrgefühls ist es im Stand der Technik bekannt, aus einer tatsächlichen momentanen Fahrsituation Parameter wie Fahrzeuggeschwindigkeit, Lenkwinkel, Lenkungs-Reaktionsmoment und dergleichen zu erfassen, und aus diesen ein Rücckopplungs- oder Feedback-Signal zu bilden, welches in einen Feedback-Aktuator der Lenkeingabevorrichtung eingespeist wird. Der Feedback-Aktuator weist einen mit der Lenkhandhabe gekoppelten elektrischen Antrieb auf, beispielsweise einen Motor, dessen Motorwelle mit der Lenkspindel gekoppelt ist. Im realen Fahrbetrieb, dem Realbetriebsmodus, wird der Motor durch das Feedback-Signal angesteuert, um eine dem realen Reaktionsmoment entsprechendes Rückstell- oder Feedback-Kraft in die Lenkhandhabe einzukoppeln, beispielsweise ein Feedback-Moment ein drehbares Lenkrad einzubringen. Derartige "Force-feedback"-Systeme geben dem Fahrer den Eindruck einer realen Fahrsituation wie bei einer konventionellen Lenkung, was eine intuitive Reaktion erleichtert.

Zur Nutzung des Fahrzeugs außerhalb des Realbetriebsmodus, wenn es nicht im Verkehr bewegt wird, ist es bekannt, beispielsweise im Fahrzeuginnenraum integrierte Anzeigeeinrichtungen, wie beispielsweise optische und akustische Displays, Bildschirme, Head-up-Displays oder dergleichen, und zusätzlich oder alternativ akustische Systeme, die im realen Fahrbetrieb überwiegend zur Anzeige von Betriebsdaten und für die Fahrsituation relevanten Informationen, wie beispielweise Routen- und Navigationsdaten, eingesetzt werden, auch für Unterhaltungszwecke zu nutzen, wie beispielsweise in der EP 2 305 506 B1 beschrieben. Dies kann eine Wiedergabe von Video-, Audio- oder anderen Dateninhalten umfassen, und beispielsweise auch die Ausführung von interaktiven Computersimulationen, wie sie beispielsweise als Computer- oder Videospiele weithin bekannt sind.

Die eingangs genannten Lenkeingabevorrichtungen sind bei einer Nutzung des Fahrzeugs außerhalb des Realfahrbetriebs zeitweilig funktionslos und werden daher eher als störend angesehen. Es daher bisher bekannt, diese im Fahrzeuginnenraum in eine Verstauposition außerhalb der Bedienposition der Lenkhandhabe zu bringen und dabei auf möglichst kleinem Raum zu verstauen, beispielsweise aus der DE 10 2019 217 279 A1.

Ein Kraftfahrzeug der eingangs genannten Art ist aus der DE 10 2018 106 842 A1 bekannt.

Angesichts der vorangehend erläuterten Problematik ist es eine Aufgabe der vorliegenden Erfindung, eine erweiterte Nutzung außerhalb des Realfahrbetriebs zu ermöglichen.

### Darstellung der Erfindung

Diese Aufgabe wird erfindungsgemäß gelöst durch das Kraftfahrzeug mit den Merkmalen des Anspruchs 1, und das Verfahren zum Betrieb eines Kraftfahrzeugs gemäß Anspruch 10. Vorteilhafte Weiterbildungen ergeben sich aus den Unteransprüchen.

Bei einem Kraftfahrzeug mit einem Steer-by-Wire-Lenksystem, umfassend eine Lenkeingabevorrichtung, von der mindestens ein elektromotorischer Lenkaktuator ansteuerbar ist, wobei die Lenkeingabevorrichtung eine Sensoreinrichtung zur Erfassung manueller Eingaben umfasst und einen elektromotorischen Feedback-Aktuator aufweist, der ansteuerbar ist zur Erzeugung eines mechanischen Feedbacks, wird erfindungsgemäß vorgeschlagen, dass das Kraftfahrzeug umschaltbar ist zwischen einem Realbetriebsmodus und einem Simulationsmodus, wobei die Lenkeingabevorrichtung mit einer Simulationseinrichtung verbindbar ist, die ausgebildet ist, um von der Sensoreinrichtung angesteuert zu werden, und den Feedback-Aktuator anzusteuern, wobei im Realbetriebsmodus die Aktivierung des Simulationsmodus gesperrt ist.

Die Sensoreinrichtung ist ausgebildet, um mit einer manuellen Lenkhandhabe zusammenzuwirken, beispielsweise einem an einer um ihre Längsachse drehbaren Lenkspindel angebrachten Lenkrad. Manuelle Eingaben, wie etwa eine Drehung oder anderweitige Betätigung der Lenkhandhabe zur Eingabe von Lenkbefehlen, können von der Sensoreinrichtung erfasst und in elektrische Steuersignale umgewandelt werden, beispielsweise durch Drehsensoren wie Drehwinkel und/oder Drehmomentsensoren, und/oder manuell bedienbare Schalter und dergleichen.

Zur Verarbeitung der Steuersignale kann die Sensoreinrichtung an eine Steuereinheit des Kraftfahrzeugs angeschlossen sein. Im Realbetriebsmodus kann mittels der Steuersignale mindestens ein mit mindestens einem lenkbaren Rad wirkverbundener elektromotorischer Lenkaktuator, auch als Lenksteller bezeichnet, zur Erzeugung eines Lenkeinschlags angesteuert werden. Dazu können ein oder mehrere Lenkaktuatoren an die Lenkeingabevorrichtung angeschlossen sein.

Erfindungsgemäß ist eine Simulationseinrichtung vorgesehen, die an die Lenkeingabeeinrichtung anschließbar ist, aber nicht mit einem Lenkaktuator zusammenwirkt. Die Simulationseinrichtung ist ausgebildet und eingerichtet, durch manuelle Betätigung der Sensoreinrichtung erzeugte Steuersignale als Eingangssignale zu empfangen, diese elektronisch zu verarbeiten und abhängig davon Ausgangssignale zu erzeugen und auszugeben. Die Ausgangssignale können bevorzugt Video- und/oder Audiosignale und Feedback-Signale umfassen. Die Audio- und/oder Videosignale können bevorzugt auf einer im Kraftfahrzeug vorhandenen Anzeigeeinrichtung (Displayeinrichtung) optisch und/oder akustisch dargestellt und wiedergegeben werden, beispielsweise auf einer Displayeinrichtung, die einen Bildschirm, ein Head-up-Display, und andere optische, akustische, haptische oder alternative Ausgabe- oder Anzeigemittel aufweisen kann.

Außerdem können erfindungsgemäß von der Simulationseinrichtung entsprechend einem Simulationsalgorithmus Feedback-Signale erzeugt und zur mechanischen Feedback-Erzeugung an den Feedback-Aktuator abgegeben werden. Der Simulationsalgorithmus kann bevorzugt als Simulationssoftware in Form eines Computerprogramms zur Verfügung gestellt werden, welches auf einem hierzu ausgebildeten Computer der Simulationseinrichtung ausgeführt wird. Die Simulationssoftware kann einen Fahrsimulator zur virtuellen Nachbildung realer Fahrsituationen umfassen, oder auch ein Computerspiel mit fiktiven Betriebsszenarien.

Bei der Erfindung ist das Kraftfahrzeug umschaltbar zwischen einem Realbetriebsmodus und einem Simulationsmodus. Die Umschaltung kann durch manuelle Betätigung erfolgen. Im Realbetriebsmodus ist der reale, mit lenkbaren Rädern verbundenen Lenkaktuator ansteuerbar, und die Simulationseinrichtung nicht aktivierbar. Umgekehrt sind im Simulationsmodus die realen Betriebsfunktionen der Lenkeingabevorrichtung und anderer Bedieneinrichtungen des Kraftfahrzeugs abgeschaltet, so dass kein realer Fahrbetrieb möglich ist. Dadurch kann sichergestellt werden, dass im Realbetriebsmodus keine Ablenkung oder Beeinträchtigung erfolgt, und umgekehrt die Simulation potentiell riskanter Situationen im Simulationsbetrieb keine reale Gefährdung erzeugen kann.

Durch Aktivierung der Simulationseinrichtung kann ein Simulationsmodus des Fahrzeugs realisiert werden. Dabei ist es möglich, während dem Simulationsmodus im Gegensatz zum Realbetriebsmodus mittels der Lenkeingabevorrichtung keine Ansteuerung eines Lenkaktuators erfolgt.

Dadurch ermöglicht die Simulationseinrichtung im Simulationsmodus eine Visualisierung oder anderweitige Anzeige oder Ausgabe von manuell in die Lenkeingabevorrichtung eingegebenen Steuerbefehlen, und zusätzlich kann über den Feedback-Aktuator eine mechanische Rückmeldung an die Lenkhandhabe abgegeben werden, die auch als Force-Feedback bezeichnet wird. Auf diese Weise kann eine haptische Interaktion mit der Bedienperson erzeugt werden, wodurch ein simuliertes, virtuelles Betriebsszenario, beispielsweise entsprechend einer Fahrsituation, in ein realitätsnahes Fahr- und Bediengefühl umgesetzt werden kann.

Ein wesentlicher Vorteil der Erfindung ist, dass die in dem Fahrzeug vorhandene Lenkeingabevorrichtung als Eingabe- und Ausgabeeinrichtung zur interaktiven Kommunikation mit einem von der Simulationseinrichtung bereitgestellten simulierten, virtuellen Betriebsszenarien genutzt werden kann. Dies ermöglich eine erweiterte Nutzung des Fahrzeugs außerhalb des Realfahrbetriebs als eine Art Simulatorstand, wobei die Lenkeingabeeinrichtung zur interaktiven Bedienung von Simulationssoftware einbezogen werden kann.

Es können durch entsprechende Ausgestaltung der Simulationssoftware unterschiedliche Arten von Simulationen auf der Simulationseinrichtung laufen. Beispielsweise können zur Simulation einer realitätsnahen Fahrsituation ein vorgegebener Fahrbahnverlauf, eine Fahrbahnbeschaffenheit oder dergleichen externe Parameter vorgegeben sein. Dadurch kann das Fahrzeug außerhalb des Realbetriebsmodus als Fahrsimulator genutzt werden, wobei alltägliche, aber auch extreme Fahrsituationen ohne reale Gefährdung simuliert und trainiert werden können. Dies ermöglicht einen erweiterten Einsatz des Fahrzeugs als eine Art Fahrsimulator zu Trainings- und Schulungszwecken. Dabei ist es insbesondere auch vorteilhaft, dass dieselben Bedienelemente des Fahrzeugs wie im realen Fahrbetrieb im virtuellen Fahrtraining genutzt werden können, wodurch der Lerneffekt verbessert und die Fahrsicherheit erhöht werden kann.

Es ist auch möglich, in der Simulationseinrichtung ein fiktives Betriebsszenario vorzugeben, wie üblicherweise in einem Computer- oder Videospiel. Dabei kann anstelle eines konventionellen Kraftfahrzeugs ein beliebiges anderes Fahrzeug simuliert werden, beispielsweise auch ein Flug- oder Raumfahrzeug, oder es können in der Realität nicht existente Umgebungsbedingungen als Simulationsparameter vorgegeben werden. Dies ermöglicht die vorteilhafte Nutzung des Fahrzeugs zu Unterhaltungszwecken. Dabei ist es vorteilhaft, dass die für den realen Fahrbetrieb ausgelegte Lenkeingabevorrichtung eine als besonders realitätsnah empfundene interaktive Kommunikation mit virtuellen Computerspielszenarien ermöglicht, wodurch ein hoher Unterhaltungswert realisiert werden kann.

Die Steuersignale alternativ oder zusätzlich auch drahtlos, beispielsweise über WLAN, Bluetooth, Mobilfunk oder dergleichen von und zur Lenkeingabevorrichtung übermittelt werden. Dadurch ist eine Anbindung in Datennetzwerke und eine Ankopplung von weiteren externen Ein- und Ausgabeeinrichtungen möglich.

Es ist bevorzugt vorgesehen, dass die Simulationseinrichtung mit einer Anzeigeeinrichtung verbindbar ist. Die Anzeigeeinrichtung kann ein Display, einen Monitor, eine Lautsprecheranordnung oder andere optische, akustische, haptische Ausgabemittel umfassen. Bevorzugt können die im Kraftfahrzeug vorhandenen Anzeigeeinrichtungen verwendet werden, beispielsweise ein Monitor, ein Head-up-Display, ein Soundsystem oder dergleichen. Dies ermöglicht eine vorteilhafte, realitätsnahe Simulation, für eine attraktive Nutzung sowohl als Fahrsimulator als auch für Computerspiele. Alternativ oder zusätzlich ist eine drahtlose Ausgabe auf einer externen Anzeigeeinrichtung möglich.

Es kann vorgesehen sein, dass mindestens eine manuelle Bedieneinrichtung mit der Simulationseinrichtung verbindbar ist. Die mindestens eine Bedieneinrichtung kann zusätzlich und unabhängig von der Sensoreinrichtung realisiert sein, und kann mit anderen Worten unabhängig von der Sensoreinrichtung bedienbar sein. Eine Bedieneinrichtung kann beispielsweise in dem Kraftfahrzeug eingebaute, manuell betätigbare Bedienelemente wie Schalter, Pedale und dergleichen umfassen, die als Eingabeelemente ausgebildet sind und abhängig von einer manuellen Betätigung ein elektrisches Steuersignal an die Simulationseinrichtung abgeben können. Die Bedieneinrichtung kann mechanische, optische, akustische Schaltmittel, Messaufnehmer, Sensoren oder dergleichen umfassen. Die Bedienelemente können in der Lenkeingabevorrichtung integriert sein, beispielsweise als Lenkstockschalter, und/oder separat angeordnet sein, beispielsweise als Pedale, Schalter oder dergleichen im Cockpit des Fahrzeugs. Dadurch können in vorteilhafter Weise vielfältige Bedienmöglichkeiten vorgesehen sein, in der für den Realbetriebsmodus vorgesehene Bedienelemente auch im Simulationsmodus genutzt werden können. Dadurch werden die Nutzungsmöglichkeiten erweitert. Dabei ist es möglich, die Bedienelemente in einer Fahrsimulation auch in einem Simulationsszenario bestimmungsgemäß einzusetzen, oder in einem Computerspiel vorhandene Bedienelemente mit völlig neuen, fiktiven Funktionalitäten auszustatten, beispielsweise zur Bedienung von Raumfahrzeugen oder dergleichen.

Es kann weiterhin vorteilhaft sein, dass mindestens eine motorische Ausgabeeinrichtung mit der Simulationseinrichtung verbindbar ist. Die motorische Ausgabeeinrichtung kann außerhalb der Lenkeingabevorrichtung ausgebildet oder angeordnet sein, und ist dabei unabhängig von dem Feedback-Aktuator der Lenkeingabevorrichtung realisierbar. Die Ausgabeeinrichtung kann einen in dem Fahrzeug vorhandenen elektromotorischen Aktuator umfassen. Beispielsweise kann die Ausgabeeinrichtung einen Verstellantrieb umfassen, zur motorischen Verstellung eines Fahrzeugsitzes, und/oder einen Verstellantrieb zur Verstellung der Position der Lenkhandhabe, oder dergleichen. Die Ausgabeeinrichtung kann im Simulationsmodus ebenfalls von der Simulationseinrichtung angesteuert werden, um ein erweitertes mechanisches Feedback im Rahmen einer laufenden Simulation zu ermöglichen. Beispielweise kann durch eine Neigung des Fahrzeugsitzes eine Beschleunigung simuliert werden, gegebenenfalls auch im Zusammenspiel mit einer motorischen Verstellung der Lenkeingabevorrichtung, wie sie im Prinzip zur Längs- und Höhenverstellung von elektrischen verstellbaren Lenksäulen in Kraftfahrzeugen bekannt ist. Dadurch kann mit Vorteil der realistische Eindruck der Simulation nochmals erhöht werden. Dabei ist wiederum vorteilhaft, dass die für den realen Fahrbetrieb ausgelegten Ausgabeeinrichtungen genutzt werden.

Die Ausgabeeinrichtungen können auch andere in dem Fahrzeug vorhandene elektromotorische Antriebsmittel von der Simulationseinrichtung zur Erzeugung eines mechanischen Feedbacks ansteuerbar sein. Dies können beispielsweise elektrisch verstellbare aktive Fahrwerke, Radaufhängungen, Stossdämpfer oder dergleichen sein, durch die das Fahrzeug quer und/oder längs verkippt werden kann, oder die zur Simulation eines unebenen Untergrunds ruckartig verstellt werden können. Es ist auch denkbar, elektrische Einzelradantriebe zur Erzeugung von Feedback zu nutzen, wobei in jedem Fall sichergesetllt sein sollte, dass das Fahrzeug beim Ausführen einer Simulation seine reale Position gegenüber der Fahrbahn möglichst nicht verändert.

Unter dieser Maßgabe, dass das Fahrzeug beim Ausführen einer Simulation seine reale Position möglichst nicht verändern soll, kann auch die Ansteuerung eines und/oder mehrerer Lenkaktuatoren erfolgen, so dass das gesamte Fahrzeug in entsprechende Bewegungen versetzt werden kann. Dabei erfolgt kein drehender Antrieb der Fahrzeugräder.

Es ist vorteilhaft, dass eine Sicherheitseinrichtung vorgesehen ist, durch die im Simulationsmodus der Fahrbetrieb blockiert ist. Dadurch kann sicher verhindert werden, dass eine Bedienung im Simulationsmodus reale Gefährdungen im Fahrbetrieb auslöst. Bevorzugt kann die Sicherheitseinrichtung ausgebildet sein, um Start und Betrieb des Fahrzeugantriebs zu unterbrechen, und zusätzlich eine Bremse zu aktivieren, beispielsweise eine elektromotorische Radbremse, und dadurch jegliche Fahrbewegung des Fahrzeugs verhindern, solange der Simulationsmodus aktiv ist. Bevorzugt ist umgekehrt vorgesehen, dass im Realbetriebsmodus die Aktivierung des Simulationsmodus gesperrt ist. Mit anderen Worten kann die die Sicherheitseinrichtung im Sinne einer exklusiv-oder-Verknüpfung entweder den Realfahrbetrieb oder den Simulationsbetrieb zulassen.

Insbesondere kann mit Vorteil vorgesehen sein, dass die Aktivierung des Simulationsmodus nur möglich ist, wenn die relative Geschwindigkeit des Fahrzeugs gegenüber der Fahrbahn Null ist, also keine Bewegung des Fahrzeuges gegenüber der Fahrbahn erfolgt, das Fahrzeug sich also im Stillstand befindet. Mit Vorteil muss dabei das Bremspedal in eine Bremsstellung, mit Vorteil in eine Vollbremsstellung betätigt sein. Damit kannt dann die Betriebsbremse auch angezogen worden sein, so dass diese in dieser Position für die Dauer des Simulationsmodus automatisch vom Fahrzeug fixiert gehalten werden kann. Weiter kann der Fahrer des Fahrzeugs eine Eingabeeinrichtung betätigen, wie beispielsweise einen mechanischen Schalter oder eine Touchsceen-Fläche, um die Umschaltung in den Simulationsmodus zu veranlassen. Durch die kombinierte Betätigung der Bremse und der Eingabeeinrichtung, sowie des Stillstandes des Fahrzeuges ist dann auch damit klar, dass der Fahrer des Fahrzeugs sich aktiv für die Umschaltung in den Simulationsmodus entschieden hat.

Bevorzugt ist, dass die Simulationseinrichtung ausgebildet zur Ausführung von Simulationssoftware. Dies kann dadurch ermöglicht werden, dass die Simulationseinrichtung eine Computereinrichtung aufweist, die ausgelegt ist, um die Ausführung von komplexer Simulationssoftware, beispielsweise eines Fahrsimulators, und/oder vom zeitgemäßen und attraktiven Computerspielen zu ermöglichen.

Es ist möglich, dass die Simulationseinrichtung mit einer Steuereinheit des Kraftfahrzeugs verbunden oder integriert ausgebildet ist. Die Steuereinheit eines modernen Kraftfahrzeugs bietet in der Regel hinreichend Rechnerkapazität für komplexe Simulationssoftware und zum Betrieb von Sensor- und Steuereinrichtungen in Echtzeit. Daher ist es mit Vorteil möglich, die Erfindungsgemäße Nutzung der Lenkeingabevorrichtung mit relativ geringem Aufwand zu realisieren.

Die Simulationseinrichtung kann Datenschnittstellen aufweisen. Dabei kann es sich um kabelgebundene und/oder drahtlose Schnittstellen handeln, welche den Anschluss der vorangehend beschriebenen Eingabe- und Ausgabeeinrichtungen an die Simulationseinrichtung ermöglichen. Es ist auch möglich, die Simulationseinrichtung in Datennetzwerke einzubinden, beispielsweise um eine Fahrsimulation online zu überwachen, oder auch weitere Mitspieler online in eine Simulation oder ein Computerspiel einzubinden. Dadurch können die Einsatzmöglichkeiten des Fahrzeugs nochmals erweitert werden.

Eine vorteilhafte Ausführung kann dadurch realisiert werden, dass die Lenkeingabeeinrichtung eine Lenksäule umfasst, die eine in einer Manteleinheit um eine Längsachse drehbar gelagerte Lenkspindel aufweist, an der eine Lenkhandhabe, beispielsweise ein Lenkrad, anbringbar ist, und die mit einem Feedback-Aktuator wirkverbunden ist zur Beaufschlagung mit einem Feedback-Moment. Derartige Lenksäulen mit einem drehbar gelagerten Lenkrad sind für Steer-by-Wire in vielfältigen Ausführungen bekannt, beispielsweise aus dem eingangs genannten Stand der Technik. Sie zeichnen sich durch eine robuste, ausgereifte Konstruktion aus, und ermöglichen eine intuitive Bedienung. Die Bauart ermöglicht eine präzise Lenkeingabe, und durch ein als Feedback-Moment eingeleitetes Force-Feedback kann ein besonders realitätsnahes Fahrgefühl erzeugt werden. Eine derartige Lenksäule kann problemlos und mit geringem Aufwand im erfindungsgemäßen Simulationsmodus betrieben werden.

Eine Lenksäule der vorangehend beschriebenen Art kann bevorzugt in an sich bekannter Weise über eine Trageinheit an einer Fahrzeugkarosserie gehalten sein, wobei die Lenkspindel samt Lenkrad in Richtung der Längsachse längsverstellbar und quer dazu in Höhenrichtung höhenverstellbar angebracht sein kann. Zur Längsverstellung und zusätzlich oder alternativ zur Höhenverstellung können elektromotorische Verstellantriebe vorgesehen sein, die wie oben erwähnt ebenfalls von der Simulationseinrichtung angesteuert werden können.

Die Erfindung umfasst weiterhin ein Verfahren zum Betrieb eines Kraftfahrzeugs, mit einem Steer-by-Wire-Lenksystem, umfassend eine Lenkeingabevorrichtung, von der mindestens ein elektromotorischer Lenkaktuator ansteuerbar ist, wobei die Lenkeingabevorrichtung eine Sensoreinrichtung zur Erfassung manueller Eingaben umfasst und einen elektromotorischen Feedback-Aktuator aufweist, der ansteuerbar ist zur Erzeugung eines mechanischen Feedbacks, dadurch gekennzeichnet, dass die Lenkeingabevorrichtung mit einer Simulationsvorrichtung verbunden wird, um ein virtuelles Betriebsszenario zu steuern, und abhängig von dem virtuellen Betriebsszenario mit Feedback beaufschlagt wird.

Sämtliche Merkmale, Merkmalskombinationen und Funktionen, die vorangehend im Zusammenhang mit einem erfindungsgemäß ausgestalteten Kraftfahrzeug erläutert sind, können bei dem erfindungsgemäßen Verfahren einzeln oder in Kombinationen umgesetzt sein.

Im Simulationsbetrieb kann auf der Simulationsvorrichtung beispielsweise ein Fahrsimulationsprogramm oder ein Computerspiel ausgeführt werden, wobei von der Simulationseinrichtung ein virtuelles Betriebsszenario erzeugt wird. Erfindungsgemäß kann die Lenkeingabevorrichtung genutzt werden, um interaktiv innerhalb dieses Betriebsszenarios zu agieren. Dabei können durch manuelle Betätigung der Lenkhandhabe Befehle eingegeben werden, und entsprechend der Simulation kann die Lenkhandhabe von dem Feedback-Aktuator aktiv mechanisch betätigt werden, um eine haptische Rückmeldung zu erzeugen. Durch das erfindungsgemäße Verfahren wird die vorteilhafte Nutzung eines für den Realbetriebsmodus ausgelegten Lenksystems für eine Fahrsimulation oder in einem Computerspiel ermöglicht. Dadurch kann ein Fahrzeug in erweitertem Umfang zur Schulung und für virtuelle Fahrtrainings, oder auch zur Unterhaltung in einem Computerspiel genutzt werden.

Dabei kann eine vorteilhafte Ausgestaltung sein, dass mindestens ein in dem Kraftfahrzeug vorhandene Bedieneinrichtung zur Steuerung der Simulationseinrichtung genutzt wird. Auf diese Weise kann die gesamte vorhandene Betriebsinfrastruktur des Fahrzeugs einschließlich optischer, akustischer und sonstiger Ein- und Ausgabeeinrichtungen, motorischer Aktuatoren und dergleichen in die Simulation mit einbezogen werden. Es können jegliche in dem Kraftfahrzeug vorhandene Bedienelemente zur Ansteuerung der Simulationseinrichtung verwendet werden, beispielsweise manuelle Schalter oder kontinuierliche Regler - wie ein Lautstärkeregler oder ein Gaspedal - zur Steuerung des Fahrbetriebs oder von weiteren Funktionen, beispielsweise von erweiterten Komfortfunktionen, Unterhaltungselektronik oder dergleichen. Dabei ist es durch einen entsprechend ausgelegten Simulationsalgorithmus denkbar und möglich, dass die Bedienelemente in der Simulation bestimmungsgemäß wirken, beispielsweise ein Gaspedal zur Beschleunigung, oder neuartige, von der realen Funktion abweichende virtuelle Funktionalitäten zugewiesen bekommen, beispielweise zur dreidimensionalen Navigation, die üblicherweise im Kraftfahrzeug nicht erforderlich ist.

Es ist vorteilhaft, dass wahlweise ein Realbetriebsmodus oder ein Simulationsmodus des Kraftfahrzeugs eingestellt werden kann. im Realbetriebsmodus die Aktivierung des Simulationsmodus gesperrt ist. Mit anderen Worten kann im Sinne einer exklusiv-oder-Verknüpfung entweder der Realfahrbetrieb oder der Simulationsbetrieb zugelassen sein. Dies kann beispielsweise durch eine Sicherheitseinrichtung realisiert werden, die im Simulationsbetrieb eine Fahrbewegung des Fahrzeugs blockiert, und umgekehrt.

Bei dem Verfahren kann in der Simulationseinrichtung beispielsweise ein Fahrsimulationsprogramm oder ein Computerspiel ausgeführt werden. Dabei ist es auch denkbar, dass von dem Fahrzeug real stattgefundene Fahr- und Betriebssituationen erfasst, und die dabei gewonnenen Daten zur Erzeugung eines virtuellen Betriebsszenarios zu nutzen. Aus diese Weise können beispielsweise zum Training kritische reale Fahrsituationen virtuell wiederholt werden. Ein besonderer Vorteil des erfindungsgemäßen Verfahrens ist, dass derartige Simulationen direkt im Fahrzeug ausgeführt werden können, wodurch der Aufwand verglichen mit einem externen Simulatortraining verringert wird. Ebenso kann durch die Nutzung in Computerspielen auf die externe Bereitstellung einer aufwendigen Force-Feedback-Infrastruktur verzichtet werden, wodurch sich ebenfalls ein reduzierter Aufwand ergibt.

### Beschreibung der Zeichnungen

Vorteilhafte Ausführungsformen der Erfindung werden im Folgenden anhand der Zeichnungen näher erläutert. Im Einzelnen zeigen:
- Figur 1: ein erfindungsgemäßes Kraftfahrzeug in einer schematischen Darstellung,
- Figur 2: eine schematische Darstellung eines erfindungsgemäß ausgestalteten Lenksystems eines Fahrzeugs gemäß Figur 1,
- Figur 3: eine schematische Darstellung von Bedieneinrichtungen in einem erfindungsgemäßen Fahrzeug,
- Figur 4: eine schematische Darstellung einer Betriebssituation eines Fahrzeugs.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

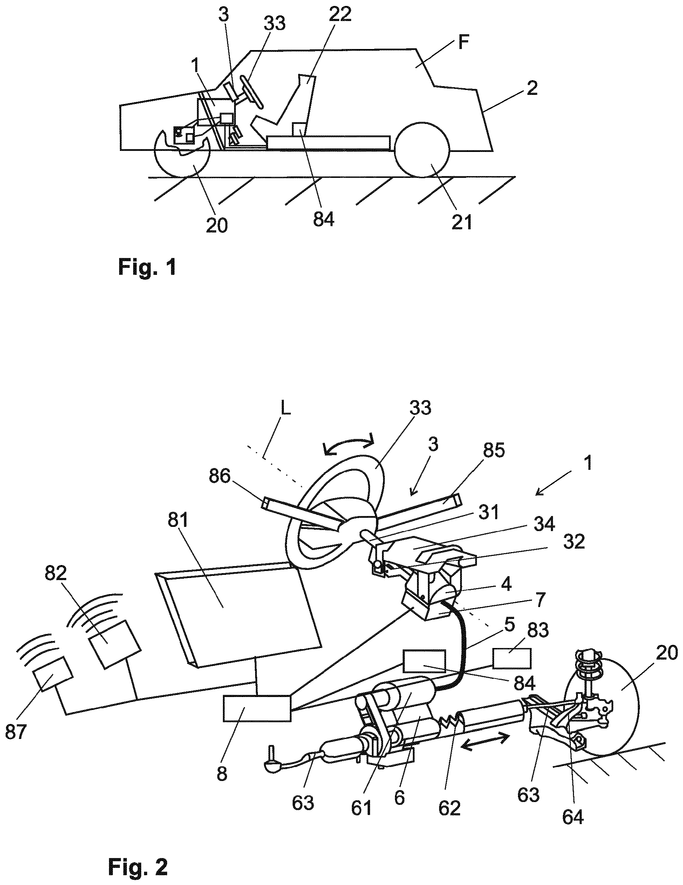

Fig. 1 zeigt ein erfindungsgemäßes Fahrzeug F, welches ein als Steer-by-Wire-Lenksystem ausgebildetes Lenksystem 1 aufweist. Dieses ist schematisch in Figur 2 separat dargestellt.

Das Fahrzeug F weist eine Karosserie 2 sowie Räder 20 und 21, von denen die Räder 20 lenkbar sind.

Das in Figur 2 separat dargestellte Lenksystem 1 weist eine Lenkeingabevorrichtung 3 auf, die als Lenksäule 3 ausgebildet ist, und im Folgenden gleichbedeutend so bezeichnet wird.

Die Lenkeingabevorrichtung (=Lenksäule) 3 weist eine Lenkspindel 31 auf, die in einer Manteleinheit 32 um ihre Längsachse L drehbar gelagert ist. An ihrem bezogen auf die Fahrtrichtung des Fahrzeugs F hinteren, der Fahrerposition im Fahrzeuginnenraum zugewandten Ende ist als Lenkhandhabe ein Lenkrad 33 an der Lenkspindel 31 angebracht. Die Manteleinheit 32 ist von einer Trageinheit 34 gehalten, welche an der Karosserie 2 angebracht ist.

Die Lenkspindel 31 wirkt mit einer Sensoreinrichtung 4 der Lenkeingabevorrichtung 3, die Drehsensoren, bevorzugt Winkel- und Drehmomentsensoren, umfasst. Diese können eine Drehbewegung des Lenkrads 33 in elektrische Steuersignale umwandeln.

Bezüglich der Fahrtrichtung hinter dem Lenkrad ist ein Fahrersitz 22 angeordnet, der bevorzugt verstellbar an der Karosserie 2 angebracht ist.

Die Sensoreinrichtung 4 ist über eine Steuerleitung 5 mit einem elektromotorischen Lenkaktuator 6 verbunden. Dieser weist einen elektrischen Motor 61 auf, der in an sich bekannter Weise über ein auf seiner Motorwelle angebrachtes Ritzel in eine Zahnstange 62 eingreift, die abhängig von der Drehrichtung des Motors 61 quer zur Fahrtrichtung verschiebbar ist, wie mit dem Doppelpfeil angedeutet. Über Spurstangen 63 ist die Zahnstange 62 an Achsschenkel 64 der lenkbaren Räder 20 angelenkt. Somit kann durch eine Ansteuerung des Motors 61 die Zahnstange 61 verschoben werden, um einen Lenkeinschlag der gelenkten Räder 20 zu erzeugen.

Die Lenkeingabevorrichtung 3 weist einen Feedback-Aktuator 7 auf, der beispielsweise in der Manteleinheit 32 integriert oder daran angebracht sein kann. Der Feedback-Aktuator 7 weist in an sich bekannter Weise einen Feedback-Antrieb mit einem elektrischen Motor auf, der mit der Lenkspindel 31 gekuppelt oder kuppelbar ist, um ein motorisches Feedback-Moment einleiten zu können. Dieses wird auf das Lenkrad 33 übertragen und ist dort haptisch wahrnehmbar, beispielsweise als ein einer manuellen Lenkbewegung entgegengesetztes Rückstellmoment.

Die Sensoreinrichtung 4 und der Feedback-Aktuator 7 sind erfindungsgemäß an eine Simulationseinrichtung 8 angeschlossen. Diese umfasst einen Computer samt dazugehöriger Peripherie, wie Speicher, Schnittstellen und dergleichen, wobei die verfügbare Rechnerleistung ausreichend ist, um komplexe Simulationssoftware oder Computerspiele auszuführen. Die Simulationseinrichtung 8 kann in eine - hier nicht separat dargestellte - Steuereinheit des Fahrzeugs F integriert sein, die im realen Fahrbetrieb die Ansteuerung des Lenkaktuators 6 und anderer Betriebsaggregate übernehmen kann. Alternativ kann die Simulationseinrichtung 8 anders ausgebildet sein, wobei sie bevorzugt über Datenschnittstellen mit der Steuereinheit verbunden ist.

An die Simulationseinrichtung 8 ist als Anzeige- oder Ausgabeeinrichtung ein Display 81 angeschlossen, beispielsweise ein Bildschirm, ein Head-up-Display oder dergleichen, welches auch berührungsempfindlich ausgestaltet sein kann, beispielsweise als Touchscreen, um als Eingabeeinrichtung zu fungieren. Neben visuellen Ausgaben kann das Display 81 auch eine Audio-Anlage 87 umfassen, beispielsweise eine Lautsprecheranlage. Die Audio-Anlage kann ebenfalls interaktiv ausgestaltet sein und beispielsweise ein Mikrofon zur akustischen Eingabe aufweisen. Das Display 81 kann bevorzugt in dem Fahrzeug F integriert sein.

Eine weitere Kommunikationseinrichtung 82 kann an die Simulationseinrichtung 8 angeschlossen sein, die ebenfalls als Ein- und/oder Ausgabemittel genutzt werden kann, beispielsweise eine W-LAN-, Mobilfunk-, Bluetooth ^{®}- oder sonstige kabelgebundene oder drahtlose Datenschnittstelle.

Es können weitere Ein- und/oder Ausgabemittel, wie beispielsweise im Fahrzeug F eingebaute Bedieneinrichtungen 83 und uns Ausgabeeinrichtungen 84 vorgesehen sein, beispielsweise elektrische Schalter und/oder Regler, wie beispielsweise ein Gaspedal, Bremspedal, Fahrstufen-Schalthebel oder dergleichen, die auch gleichzeitig als Ein- und/oder Ausgabemittel ausgestaltet sein können. So ist es beispielsweise auch möglich, dass die Bedieneinrichtungen 83 und Ausgabeeinrichtungen 84 weitere, von dem Feedback-Akuator 7 verschiedene elektromotorische Aktuatoren umfassen, beispielsweise motorische Verstellantriebe zur Verstellung der Lenksäule 3 in Längs- und/oder Höhenrichtung, oder zur Verstellung eines Fahrersitzes 22 oder dergleichen, wie in Figur 1 angedeutet ist. Die Ausgabeeinrichtungen 84 können auch optische, akustische oder sonstige Ausgabe- oder Anzeigemittel umfassen, die in der Lenksäule 3 oder anderweitig im Fahrzeug F angeordnet sein können.

Weiterhin können an der Lenkeingabevorrichtung (Lenksäule) 3 manuell betätigbare Bedienelemente 85, 86 angeordnet sein, beispielsweise Lenkstockschalter, die im realen Fahrbetrieb zur Betätigung von Blinker, Fahrzeugbeleuchtung, Warnmitteln oder dergleichen genutzt werden können. Diese Bedienelemente 85, 86 können ebenfalls als Ein- und/oder Ausgabemittel ausgestaltet und mit der Simulationseinrichtung 8 verbunden sein.

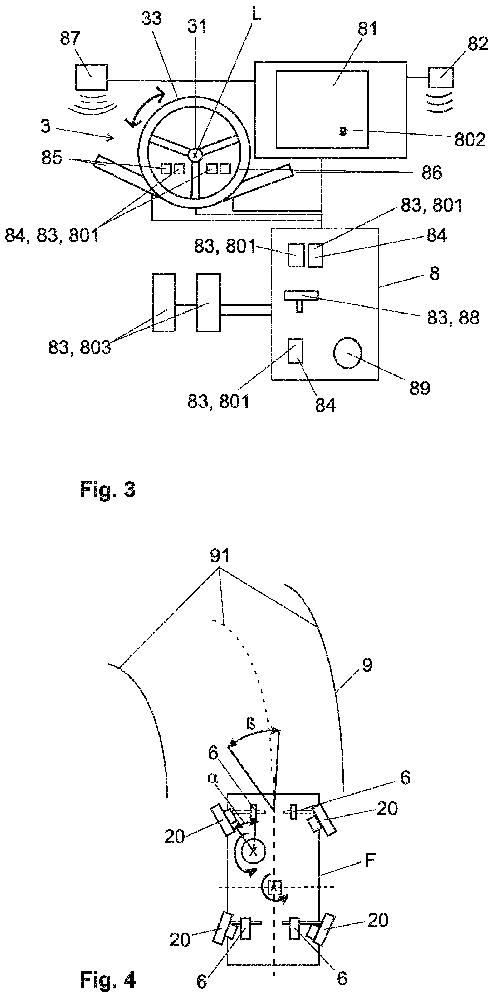

Figur 3 zeigt schematisch ein Cockpit des Fahrzeugs F aus der Fahrerperspektive, von der Sitzposition im Fahrersitz 22 aus gesehen in Fahrtrichtung nach vorn. Darin ist erkennbar, wie die Lenkeingabevorrichtung (Lenksäule) 3 mit dem Lenkrad 33, das Display 81, das als Touch-Screen berührungsempfindlich ausgestaltet ist, Bedieneinrichtungen 83, die Audio-Anlage 87, Ausgabeeinrichtungen 84 sowie Bedienelemente 85, 86 im Cockpit im manuellen Zugriffsbereich angeordnet sein können, sowie eine weitere Kommunikationseinrichtung 82. Im Beispiel sind als Bedieneinrichtung der Schalthebel 88, ein Dreh-Druckschalter 89, sowie Druckschalter oder Drucktaster 801, sowie Touch-Screen-Eingabeflächen 802, sowie Ausgabeeinrichtungen 84 und die Pedalerie 803, in Form von Bremspedal und Gaspedal, veranschaulicht. Die Ausgabeeinrichtungen 84 sind vielfach in Eingabeeinrichtungen 83, 801, 89 integriert, beispielsweise durch Kontrolllampen, die auch in verschiedenen Farben aufleuchten können.

Im Realfahrmodus, wenn das Fahrzeug F auf einer Fahrbahn 9 entlangfährt, wie in Figur 4 schematisch dargestellt, können die lenkbaren Räder 20 - hier beispielhaft für eine Vierradlenkung dargestellt - durch Drehung des Lenkrads 33 und die dadurch bewirkte Verstellung der elektrischen Lenkaktuatoren 6 um einen Lenkwinkel α eingeschlagen werden, um das Fahrzeug F um einen Fahrwinkel β seitlich zu bewegen.

Der Simulationsmodus kann nur im Stillstand des Fahrzeugs F durch Einschalten der Simulationseinrichtung 8 aktiviert werden. Die Bewegung des Fahrzeugs F im realen Fahrbetrieb ist dann blockiert, bevorzugt über eine in der Simulationseinheit 8 oder der Steuereinheit integrierte Sicherheitseinrichtung, die auch durch eine Sicherheitssoftware ausgebildet sein kann. Beispielsweise sind die Lenkaktuatoren 6 nicht von der Lenkeingabevorrichtung 3 ansteuerbar. Stattdessen dient die Lenkeingabevorrichtung 3 und andere Ein- und Ausgabeeinrichtungen des Fahrzeugs F, wie das Display 81, Bedieneinrichtungen 83, Ausgabeeinrichtungen 84 sowie Bedienelemente 85, 86 und dergleichen, zur Wiedergabe und Steuerung eines auf der Simulationseinrichtung ausgeführten Computerprogramms, beispielweise einer Fahrsimulation oder einem Computerspiel. Beispielsweise könnte in einer Fahrsimulation ein Fahrzeug F auf einem Display 81 ähnlich wie in Figur 4 graphisch dargestellt werden, wobei ein virtueller Fahrbahnverlauf 91 simuliert wird, auf dem das Fahrzeug F mittels der Lenkeingabevorrichtung 3 virtuell entlanggefahren wird.

Es können - wie oben beschrieben - durch entsprechende Simulations- oder Computerspielsoftware beliebige virtuelle Betriebsszenarien erzeugt werden. Durch die Erfindung können im Prinzip sämtliche manuellen Bedienelemente, die im Realbetriebsmodus für den realen Fahrbetrieb eingesetzt werden, auch im Simulationsmodus eingesetzt werden. Durch mechanisches Feedback über den Feedback-Aktuator 7 kann dabei ein besonders realitätsnahes Fahrgefühl und ein optimiertes Spielerlebnis bei Computerspielen erzeugt werden.

### Bezugszeichenliste

- 1: Lenksystem
- 2: Karosserie
- 20, 21: Rad
- 22: Fahrersitz
- 3: Lenkeingabevorrichtung (Lenksäule)
- 31: Lenkspindel
- 32: Manteleinheit
- 33: Lenkrad
- 34: Trageinheit
- 4: Sensoreinrichtung
- 5: Steuerleitung
- 6: Lenkaktuator
- 61: Motor
- 62: Zahnstange
- 63: Spurstange
- 64: Achsschenkel
- 7: Feedback-Aktuator
- 8: Simulationseinrichtung
- 81: Display
- 82: Kommunikationseinrichtung
- 83: Bedieneinrichtung
- 84: Ausgabeeinrichtung
- 85, 86: Bedienelemente
- 87: Audio-Anlage
- 88: Schalthebel
- 89: Dreh-Druckschalter
- 801: Druckschalter oder Drucktaster
- 802: Touch-Screen-Eingabefläche
- 9: Fahrbahn
- 91: Virtueller Fahrbahnverlauf

- F: Fahrzeug
- L: Längsachse
- α: Lenkwinkel
- β: Fahrwinkel

## Patentansprüche

1. Kraftfahrzeug mit einem Steer-by-Wire-Lenksystem (1), umfassend eine Lenkeingabevorrichtung (3), von der mindestens ein elektromotorischer Lenkaktuator (6) ansteuerbar ist, wobei die Lenkeingabevorrichtung (3) eine Sensoreinrichtung (4) zur Erfassung manueller Eingaben umfasst und einen elektromotorischen Feedback-Aktuator (7) aufweist, der ansteuerbar ist zur Erzeugung eines mechanischen Feedbacks,
**dadurch gekennzeichnet,**
**dass** das Kraftfahrzeug umschaltbar ist zwischen einem Realbetriebsmodus und einem Simulationsmodus, wobei die Lenkeingabevorrichtung (3) mit einer Simulationseinrichtung (8) verbindbar ist, die ausgebildet ist, um von der Sensoreinrichtung (4) angesteuert zu werden, und den Feedback-Aktuator (7) anzusteuern, wobei im Realbetriebsmodus die Aktivierung des Simulationsmodus gesperrt ist.

2. Kraftfahrzeug nach Anspruch 1, **dadurch gekennzeichnet, dass** die Simulationseinrichtung (8) mit einer Anzeigeeinrichtung (81, 84) verbindbar ist.

3. Kraftfahrzeug nach einem der vorangehenden Ansprüche, **dadurch gekennzeichnet, dass** mindestens eine manuelle Bedieneinrichtung (83, 85, 86) mit der Simulationseinrichtung (8) verbindbar ist.

4. Kraftfahrzeug nach einem der vorangehenden Ansprüche, **dadurch gekennzeichnet, dass** mindestens eine motorische Ausgabeeinrichtung (84) mit der Simulationseinrichtung (8) verbindbar ist.

5. Kraftfahrzeug nach Anspruch 1, **dadurch gekennzeichnet, dass** eine Sicherheitseinrichtung vorgesehen ist, durch die im Simulationsmodus der Fahrbetrieb blockiert ist.

6. Kraftfahrzeug nach einem der vorangehenden Ansprüche, **dadurch gekennzeichnet, dass** die Simulationseinrichtung (8) ausgebildet zur Ausführung von Simulationssoftware.

7. Kraftfahrzeug nach einem der vorangehenden Ansprüche, **dadurch gekennzeichnet, dass** die Simulationseinrichtung (8) mit einer Steuereinheit des Kraftfahrzeugs (F) verbunden oder integriert ausgebildet ist.

8. Kraftfahrzeug nach einem der vorangehenden Ansprüche, **dadurch gekennzeichnet, dass** die Simulationseinrichtung (8) Datenschnittstellen (82) aufweist.

9. Kraftfahrzeug nach einem der vorangehenden Ansprüche, **dadurch gekennzeichnet, dass** die Lenkeingabeeinrichtung (3) eine Lenksäule (3) umfasst, die eine in einer Manteleinheit (32) um eine Längsachse (L) drehbar gelagerte Lenkspindel (31) aufweist, an der eine Lenkhandhabe (33) anbringbar ist, und die mit einem Feedback-Aktuator (7) wirkverbunden ist zur Beaufschlagung mit einem Feedback-Moment.

10. Verfahren zum Betrieb eines Kraftfahrzeugs, mit einem Steer-by-Wire-Lenksystem (1), umfassend eine Lenkeingabevorrichtung (3), von der mindestens ein elektromotorischer Lenkaktuator (6) ansteuerbar ist, wobei die Lenkeingabevorrichtung (3) eine Sensoreinrichtung (4) zur Erfassung manueller Eingaben umfasst und einen elektromotorischen Feedback-Aktuator (7) aufweist, der ansteuerbar ist zur Erzeugung eines mechanischen Feedbacks, **dadurch gekennzeichnet, dass** das Kraftfahrzeug umschaltbar ist zwischen einem Realbetriebsmodus und einem Simulationsmodus, dass der Simulationsmodus des Kraftfahrzeugs eingestellt wird, in dem die Lenkeingabevorrichtung (3) mit einer Simulationsvorrichtung (8) verbunden wird, um ein virtuelles Betriebsszenario zu steuern, und abhängig von dem virtuellen Betriebsszenario mit Feedback beaufschlagt wird, wobei im Realbetriebsmodus die Aktivierung des Simulationsmodus gesperrt ist.

11. Verfahren nach Anspruch 10, **dadurch gekennzeichnet, dass** mindestens ein in dem Kraftfahrzeug vorhandene Bedieneinrichtung (81, 82, 83, 84, 85, 86) zur Steuerung der Simulationseinrichtung (8) genutzt wird.

## Claims

1. Motor vehicle with a steer-by-wire steering system (1), comprising a steering input device (3) by which at least one electromotive steering actuator (6) can be actuated, the steering input device (3) comprising a sensor device (4) for detecting manual inputs and having an electromotive feedback actuator (7) which can be actuated to generate mechanical feedback,
**characterized in**
**in that** the motor vehicle can be switched between a real operating mode and a simulation mode, it being possible to connect the steering input device (3) to a simulation device (8) which is designed to be actuated by the sensor device (4) and to actuate the feedback actuator (7), the activation of the simulation mode being blocked in the real operating mode.

2. Motor vehicle according to claim 1, **characterized in that** the simulation device (8) can be connected to a display device (81, 84).

3. Motor vehicle according to one of the preceding claims, **characterized in that** at least one manual operating device (83, 85, 86) can be connected to the simulation device (8).

4. Motor vehicle according to one of the preceding claims, **characterized in that** at least one motorized output device (84) can be connected to the simulation device (8).

5. Motor vehicle according to claim 1, **characterized in that** a safety device is provided by which the driving mode is blocked in the simulation mode.

6. Motor vehicle according to one of the preceding claims, **characterized in that** the simulation device (8) is designed to execute simulation software.

7. Motor vehicle according to one of the preceding claims, **characterized in that** the simulation device (8) is connected or integrated with a control unit of the motor vehicle (F).

8. Motor vehicle according to one of the preceding claims, **characterized in that** the simulation device (8) has data interfaces (82).

9. Motor vehicle according to one of the preceding claims, **characterized in that** the steering input device (3) comprises a steering column (3) which has a steering spindle (31) which is mounted rotatably about a longitudinal axis (L) in a sheath unit (32) and to which a steering handle (33) can be attached, and which is operatively connected to a feedback actuator (7) for applying a feedback torque.

10. Method for operating a motor vehicle, having a steer-by-wire steering system (1), comprising a steering input device (3) which can actuate at least one electromotive steering actuator (6), the steering input device (3) comprising a sensor device (4) for detecting manual inputs and having an electromotive feedback actuator (7) which can be actuated to generate mechanical feedback, **characterized in in that** the motor vehicle can be switched between a real operating mode and a simulation mode, **in that** the simulation mode of the motor vehicle is set, in which the steering input device (3) is connected to a simulation device (8) in order to control a virtual operating scenario, and is acted upon with feedback as a function of the virtual operating scenario, the activation of the simulation mode being blocked in the real operating mode.

11. Method according to claim 10, **characterized in that** at least one operating device (81, 82, 83, 84, 85, 86) present in the motor vehicle is used to control the simulation device (8).

## Revendications

1. Véhicule automobile avec un système de direction Steer-by-Wire (1), comprenant un dispositif d'entrée de direction (3), par lequel au moins un actionneur de direction (6) électromoteur peut être commandé, le dispositif d'entrée de direction (3) comprenant un dispositif de détection (4) pour la saisie d'entrées manuelles et présentant un actionneur à rétroaction (7) électromoteur, qui peut être commandé pour générer une rétroaction mécanique,
**caractérisé en ce que**
**en ce que** le véhicule automobile peut être commuté entre un mode de fonctionnement réel et un mode de simulation, le dispositif d'entrée de direction (3) pouvant être relié à un dispositif de simulation (8) qui est conçu pour être commandé par le dispositif de détection (4) et pour commander l'actionneur à rétroaction (7), l'activation du mode de simulation étant bloquée en mode de fonctionnement réel.

2. Véhicule automobile selon la revendication 1, **caractérisé en ce que** le dispositif de simulation (8) peut être relié à un dispositif d'affichage (81, 84).

3. Véhicule automobile selon l'une des revendications précédentes, **caractérisé en ce qu'**au moins un dispositif de commande manuelle (83, 85, 86) peut être relié au dispositif de simulation (8).

4. Véhicule automobile selon l'une des revendications précédentes, **caractérisé en ce qu'**au moins un dispositif de sortie motorisé (84) peut être relié au dispositif de simulation (8).

5. Véhicule automobile selon la revendication 1, **caractérisé en ce qu'**il est prévu un dispositif de sécurité par lequel le mode de conduite est bloqué en mode de simulation.

6. Véhicule automobile selon l'une des revendications précédentes, **caractérisé en ce que** le dispositif de simulation (8) est conçu pour exécuter un logiciel de simulation.

7. Véhicule automobile selon l'une des revendications précédentes, **caractérisé en ce que** le dispositif de simulation (8) est relié ou intégré à une unité de commande du véhicule automobile (F) .

8. Véhicule automobile selon l'une des revendications précédentes, **caractérisé en ce que** le dispositif de simulation (8) présente des interfaces de données (82).

9. Véhicule automobile selon l'une des revendications précédentes, **caractérisé en ce que** le dispositif d'entrée de direction (3) comprend une colonne de direction (3) qui présente un arbre de direction (31) logé dans une unité d'enveloppe (32) de manière à pouvoir tourner autour d'un axe longitudinal (L), sur laquelle peut être montée une manette de direction (33), et qui est en liaison active avec un actionneur à rétroaction (7) pour l'application d'un couple de rétroaction.

10. Procédé de fonctionnement d'un véhicule automobile, avec un système de direction Steer-by-Wire (1), comprenant un dispositif d'entrée de direction (3), par lequel au moins un actionneur de direction (6) électromoteur peut être commandé, le dispositif d'entrée de direction (3) comprenant un dispositif de détection (4) pour la saisie d'entrées manuelles et présentant un actionneur à rétroaction (7) électromoteur, qui peut être commandé pour générer une rétroaction mécanique, **caractérisé en ce que** le dispositif d'entrée de direction (3) comprend un dispositif de détection (4) pour la saisie d'entrées manuelles, **en ce que** le véhicule automobile peut être commuté entre un mode de fonctionnement réel et un mode de simulation, **en ce que** le mode de simulation du véhicule automobile est réglé dans lequel le dispositif d'entrée de direction (3) est relié à un dispositif de simulation (8) pour commander un scénario de fonctionnement virtuel et est alimenté en feedback en fonction du scénario de fonctionnement virtuel, l'activation du mode de simulation étant bloquée dans le mode de fonctionnement réel.

11. Procédé selon la revendication 10, **caractérisé en ce qu'**au moins un dispositif de commande (81, 82, 83, 84, 85, 86) présent dans le véhicule automobile est utilisé pour commander le dispositif de simulation (8).
